# EUROPEAN PATENT SPECIFICATION

(11) **EP 1 240 306 B1**
(45) Date of publication and mention of the grant of the patent: **10.03.2004**
(21) Application number: 00985217.9
(22) Date of filing: 20.12.2000
(51) Int. Cl.: C12H 1/00, C12H 1/14

(54) **Process for stabilizing wine**
Verfahren zur Weinstabilisierung
Procédé de stabilisation du vin

(30) Priority: 21.12.1999 EP 99204585; 24.12.1999 EP 99204589
(43) Date of publication of application: 18.09.2002
(73) Proprietor: DSM IP Assets B.V., 6411 TE Heerlen (NL)
(72) Inventor: LANKHORST, Peter, Philip, NL-3051 JE Rotterdam (NL); PELLERIN, Patrice, Jacques, Marie, F-34 880 Lavérune (FR)
(74) Representative: Habets, Winand
(86) International application number: PCT/EP2000/013041
(87) International publication number: WO 2001/046380

(56) References cited:
- EP-A- 0 773 285
- US-A- 4 520 106
- VERNHET A ET AL: "Composition of tartrate precipitates deposited on stainless steel tanks during the cold stabilization of wines. I. White wines." AMERICAN JOURNAL OF ENOLOGY AND VITICULTURE 50 (4) 391-397 1999 INST. SUPERIEUR DE LA VIGNE ET DU VIN, UFR D'OENOLOGIE, IPV-ENSAM, 34060 MONTPELLIER CEDEX 2, FRANCE. E-MAIL VERNHET(A)ENSAM.INRA.FR, XP000914015
- MOINE-LEDOUX V ET AL: "An invertase fragment responsible for improving the protein stability of dry white wines." JOURNAL OF THE SCIENCE OF FOOD AND AGRICULTURE 79 (4) 537-543 1999 CORRESPONDENCE (REPRINT) ADDRESS, D. DUBOURDIEU, FAC. OF OENOLOGY, 351 COURS DE LA LIBERATION, 33405 TALENCE, FRANCE, XP000914016
- GERBAUD V ET AL: "Influence of wine polysaccharides and polyphenols on the crystallization of potassium hydrogen tartrate." JOURNAL INTERNATIONAL DES SCIENCES DE LA VIGNE ET DU VIN 1997 LAB. DE GENIE CHIMIQUE, UMR, CNRS 5503, ENSIGC, 18 CHEMIN DE LA LOGE, 31078 TOULOUSE CEDEX 4, FRANCE, vol. 31, no. 2, pages 65-83, XP000914280

## Description

### Field of the invention

The present invention relates to a process to prepare these stabilized wines.

### Background

The presence of tartaric salts, potassium hydrogen tartrate (KHT) and calcium tartrate (CaT) is one of the major causes of instability of wines. Tartaric acid is the main organic acid produced by the grape berry during its development. It is solubilised as potassium and calcium salts into grape musts during the processing of berries. During the fermentation, tartrate salts are preserved by the yeast but their solubility decreases with the increase of ethanol concentration due to the fermentation of sugars.

In young wines, potassium hydrogen tartrate is always present in supersaturating concentrations and crystallises spontaneously. After bottling of wines, the KHT instability may become a major commercial problem due to the unpredictable character of crystallisation and the presence of unattractive crystals in a bottle is often considered as an inferior quality by consumers.

Physical treatments can be used prior to bottling of the wine to prevent crystallisation of tartrate salts. These treatments consist in promoting the crystallisation by cooling the wine at -4°C or in elimination of the potassium and tartaric ions by electrodialysis or by the use of ionexchange resins. However, these time and energy consuming processes are supposed to alter the colloidal equilibrium of wines.

The alternative to physical treatments of wines is to use additives which prevent the nucleation and/or the growth of KHT crystals. An example of additives that prevent the nucleation of crystals are mannoproteins, as described in WO 96/13571 and in WO 97/49794. However, since they have no effect on the growth of added crystals, they cannot guarantee the complete stabilization of wine. Consequently, treated wines are in fact unstable. In addition, the average mannoprotein concentration in wine is not sufficient to guarantee complete prevention of crystallisation.

Carboxymethyl cellulose and meta-tartaric acid belong to the group of additives which inhibit the growth of KHT crystals. Unfortunately, carboxymethyl cellulose has not been accepted by the wine community due to its presumed negative organoleptic effect on treated wines and meta-tartaric acid is unstable at the pH of wine and at the temperature at which wine is stored. Over time, the meta-tartaric acid will hydrolyse and its protective effect disappears. Therefore, its use is restricted to low quality wines for quick consumption. Another drawback is that ideally an additive should be a natural component of wine. This is definitely not the case with meta-tartaric acid or carboxymethyl cellulose.

A. Vernhet et al (Am. J. Enol. Vitic. (1999) 50, 391-397) describe a study in which several polysaccharides and phonetic acids are identified as natural components of white wine that inhibit the crystallization of tartrate salts. V. Gerbaud et al (J. Int. Sci. Vigne Vin. (1997) 31, 65-83) describe the inhibitor effect of mannoproteins and polyphenols for the crystallization of potassium hydrogen tartrate in white and red wines. V. Moine-Ledoux & D. Dubordieu J. Sci. Food Agric. (1999) 79, 537-543 describe the use of mannoproteins extracted from yeast cell walls for stabilizing aged white wine.

Natural additives which are active on both nucleation and growth rate of crystals are by far the best guarantee for long-term stability. Until now, no such additives have been available.

### Summary

The present invention relates to the use of an oligonucleotide or polynucleotide containing preparation to produce stabilized wine, to oligonucleotide or polynucleotide containing preparation for stabilizing wine and to a process for preparing such preparations as defined in the appended claims.

### Detailed description

The present invention relates to a process for the production of stabilized wine. This process comprises the addition of an oligonucleotide or polynucleotide containing preparation to wine. In the present context, stabilized wine is wine in which the crystallization of salts of tartaric acid is prevented or retarded, either as a result of the prevention or retardation of the nucleation process or the inhibition or retardation of the growth of said crystals or both. Unstable wine is characterized by rapid crystallization of salts of tartaric acid, which is usually of an unpredictable behaviour.

Surprisingly, it was found that the addition of an oligonucleotide or polynucleotide containing preparation has a stabilizing effect on wine by preventing both the nucleation as well as the growth of KHT crystals.

In the present context, an oligonucleotide consists of 2-10 nucleotides, a polynucleotide consists of more than 10 nucleotides. The sugar moiety in the oligonucleotide or polynucleotide may be ribose, as in RNA, or deoxyribose, as in DNA.

The oligonucleotide or polynucleotide in the preparation, or the complete preparation, may be obtained from organisms, including plants, or be synthesized, e.g. by a nucleotide synthesizer. Suitable organisms include but are not limited to microorganisms, fish and mammals. Preferably, the oligonucleotide or polynucleotide is obtained from a microorganism. This includes but is not limited to bacteria, fungi and yeast. Examples of suitable yeasts are Brettanomyces, Saccharomyces and Kluyveromyces, such as for example Brettanomyces bruxellensis, Saccharomyces cerevisiae and Kluyveromyces lactis. For instance, heat-inactivated yeast may be used to prepare the oligonucleotides or polynucleotides.

Oligonucleotides and polynucleotides may be prepared according to methods known in the art. These methods comprise the culturing and harvesting of the cells, disruption of the cells in order to liberate the cell contents and isolation of the oligonucleotide or polynucleotide containing fraction by precipitation techniques, chromatography and the like.

Both RNA and DNA may be used in oligonucleotide or polynucleotide containing preparations. The RNA and DNA oligonucleotides or polynucleotides may be in any form, be it single stranded or double stranded. Suitable RNA and DNA molecules have a molecular weight between 0.4 and 500 kDa. If RNA is used, preferably RNA with a molecular weight between 3 and 200 kDa, more preferably between 10 and 100 kDa is used. If DNA is used, preferably DNA with a molecular weight between 1 and 340 kDa, more preferably DNA with a molecular weight between 1 and 100 kDa is used. RNA and DNA may be used separately, or in combination. A well known method in the art for determining the molecular weight of the oligonucleotide or polynucleotide fraction is size exclusion chromatography using a column that is calibrated with protein molecular weight standards.

The oligonucleotide or polynucleotide containing preparation according to the invention may consist exclusively or almost exclusively of nucleotides, e.g. for more than 80%. However, it is not necessary to use completely purified or almost completely purified nucleotides, any proportion of nucleotides between 0.1 and 100% of the preparation may be used in a preparation according to the invention. For instance, it is also possible to use a crude preparation obtained from e.g. yeast, which may contain 0.1 to 50% nucleic acids, or even 0.1 to 20% nucleic acids. If the nucleotides are not completely or almost completely purified, the nucleotide-containing preparation preferably contains 0.1-15% nucleotides, more preferably 1-15% nucleotides (all % on a dry matter weight basis). Other suitable constituents of the preparation apart from the oligonucleotides or polynucleotides are e.g. yeast cell wall components, such as for instance mannoproteins, or parts thereof.

The oligonucleotide or polynucleotide containing preparation may be added to the grape must or to wine. It is preferably added to the wine during ageing, i.e. after fermentation but before bottling. The invention is extremely suitable for white wines and rosé wines.

The oligonucleotide or polynucleotide containing preparation is added in such amounts that a stabilizing effect is achieved. In general, one will try to work with as low as possible amounts. Good results are possible if so much preparation is added that a final nucleic acid concentration in the wine is reached of 1 to 400 mg per liter wine. Preferably, so much is added that a concentration of 1 to 200 mg per liter wine is reached, most preferably 1 to 100 mg per liter wine is added. Any insolubles which develop may subsequently be removed using standard techniques. The skilled person will understand that the amount added will also depend on the addition or presence of e.g. other stabilizers.

The nucleation and crystal growth can be measured and quantified by the following methods (Moutounet et al. In : Actualités OEnologiques 1999 Vieme Symposium International d'Oenologie de Bordeaux (Lonvaud-Funel ed.)

Method 1, indicative of crystal nucleation, measures the time of appearance of crystals in the wine when stored at -4°C. A visual inspection is performed daily and the time necessary to detect the appearance of crystals (T_{crys}) is expressed in number of days. Unstable wine has a T_{crys} that can vary between 0.5 and 15 days. Stabilized wine is characterized by a T_{crys}^{stabilized wine}/T_{crys}^{unstable wine} of >2, preferably >5, more preferably > 10 and most preferably >40.

Method 2, indicative of crystal growth, measures the Degree of Tartaric inhibition (DTI) of the wine. Hereto, wines are stirred at -4°C and the initial conductivity is measured. Subsequently, calibrated crystals of KHT are added and the conductivity is then measured after a stable value has been reached. The DTI is defined as the percentage decrease of the initial conductivity. Stabilized wine is characterized by a DTI^{stabilized} ^{wine}/DTI^{unstable wine} of <0.8, preferably <0.5 and more preferably <0.30.

Method 3, indicative of KHT crystal nucleation, measures the true, dissolved tartaric acid concentration. An accurate volume of the wine is transferred into a glass vial, and mixed with the same accurate volume of D₂O containing a precisely known concentration of maleic acid. The ¹H NMR spectrum is run with conditions of full relaxation, and the integral of the internal standard (maliec acid) is compared with the integral of tartaric acid. In this way the dissolved tartaric acid concentration can be determined with very high precision and accuracy.
Wines Stabilized by the process according to the invention are characterized by a T_{crys}^{stabilized wine}/T_{crys}^{unstable wine} of > 2, preferably > 5, more preferably > 10 and most preferably > 40 and by a DTI^{stabilized wine}/DTI^{unstable wine} of < 0.8, preferably <0.5 and more preferably <0.3 and are biologically stabilized. In this context, biologically stabilized means that the stabilization is achieved by the addition of an additive which is generally considered as a natural component of wine, e.g. because it is derived from yeast or grapes. Examples of such biological additives are mannoprotein, DNA and RNA.

### EXAMPLES

The time of the appearance of crystals (T_{crys}), T_{crys}^{stabilized wine}/T_{crys}^{unstable wine} the degree of tartaric inhibition (DTI) of the wine and tartaric acid concentrations were measured as described above.

The concentration of nucleic acids was determined by dissolving a well known amount of the sample in D₂O, the nucleic acids were hydrolyzed by means of RNase and DNase, and the concentration of mononucleotides was measured by 600 MHz NMR after the addition of a suitable internal standard, such as maleic acid.

In all experiments an unstable white wine, Chardonnay from harvest 2000, was used. The concentration of tartaric acid at the onset of this study was 1.92 g/l. All quantitative experiments were carried out by means of NMR as described above. 0.500 ml of wine was added to 0.500 ml of a stock solution of D₂O, containing approximately 5 g/l EDTA and 5.0637 g/l maleic acid disodium salt as an internal standard for NMR measurements.

### Example 1a Effect of DNA on the crystallization of potassium hydrogen tartrate in wine.

To test the effect of DNA on the stabilization of wine, herring sperm DNA (Sigma) was purchased. Small volumes were added to 10 ml of unstable white wine, to achieve final concentrations of 0.4, 0.2, 0.1 and 0.05 g/I. The samples were stored for 1 hour at +4°C. After the removal of insolubles by centrifugation at 3000 rpm for 30 min., the samples were stored at -4°C. Results are presented below and show that DNA has a stabilizing effect on this unstable white wine, which wine showed crystals after only 16 hours at -4°C.

| Days | Property evaluated | Control stored at -4°C | Control stored at ambient T | 0.4 g/l DNA -4°C | 0.2 g/l DNA -4°C | 0.1 g/l 0.2 DNA -4°C | 0.05 g/l DNA -4°C |
|---|---|---|---|---|---|---|---|
| 4 | Crystals | + | - | - | - | - | - |
| | Tartaric acid (g/l) | 1.04 | 1.93 | 1.91 | 2.03 | 1.94 | 1.96 |
| 8 | Crystals | + | - | - | - | - | - |
| 11 | Crystals | + | - | - | - | - | - |
| 14 | Crystals | + | - | - | - | - | - |
| | Tartaric and (g/l) | 0.89 | 2.06 | 1.91 | 1.95 | 1.96 | 1.99 |
| 25 | Crystals | + | - | - | - | - | - |
| | Tartaric acid (g/l) | 0.85 | 1.94 | 1.89 | 1.96 | 1.93 | 1.96 |

The DNA was also used for tests with DNA fractions of different molecular weight. 250 mg of the DNA were dissolved in H₂O and passed over an ultra-filtration membrane (MW cut-off 10 kDa), to the retentate water was added twice for complete removal of lower molecular weight components. The retentate was freeze dried, and a yield of 165 mg was obtained, this fraction was labeled DNA-LS (large size). The permeate was passed over a membrane with MW cut-off of 1 kDa To the retentate water was added two times, and the retentate was freeze-dried. The yield was 76 mg. This product was labeled DNA-MS (medium size). The permeate was also freeze-dried, and a yield of 9 mg was obtained. This product was labeled DNA-SS (small size). The low molecular weight fraction was not used for these experiments, because the yield was too low.

### Example 1b DNA MS fraction (1kDa<MW<10kDa)

Freeze-dried DNA with a molecular weight between 1 and 10 kDa was dissolved in water in a concentration of 10 mg/ml. Small volumes were added to wine as described in Example 1a.

| Days at - 4°C | Property evaluated | Control stored at -4°C | Control Stored at Ambient T | 0.4 g/l DNA-MS | 0.2 g/l DNA-MS | 0.1 g/l DNA-MS | 0.05 g/l DNA-MS |
|---|---|---|---|---|---|---|---|
| 4 | Crystals | + | - | - | - | - | - |
| | Tartaric acid (g/l) | 1.04 | 1.93 | 1.90 | 1.95 | 1.95 | 1.94 |
| 8 | Crystals | + | - | - | - | - | - |
| 14 | Crystals | + | - | - | - | - | - |
| | Tartaric acid (g/l) | 0.89 | 2.06 | 1.85 | 1.94 | 1.97 | 2.05 |
| 25 | Crystals | + | - | - | - | - | - |
| | Tartaric acid (g/l) | 0.85 | 1.94 | 1.89 | 1.93 | 1.95 | 1.92 |

### Example 1c DNA-LS fraction (10kDa<Mw)

Freeze-dried DNA with a molecular weight > 10 kDa was dissolved in water in a concentration of 10 mg/ml. Small volumes were added to wine as described in Example 1a.

| Days at - 4°C | Property evaluated | Control Stored At -4°C | Control Stored At Ambient T | 0.4 g/l DNA-LS | 0.2 g/l DNA-LS | 0.1 g/l DNA-LS | 0.05 g/l DNA-LS |
|---|---|---|---|---|---|---|---|
| 4 | Crystals | + | - | - | - | - | - |
| | Tartaric acid (g/l) | 1.04 | 1.93 | 1.83 | 1.89 | 1.93 | 1.64 |
| 8 | Crystals | + | - | - | - | + | - |
| 11 | Crystals | + | - | - | - | + | - |
| 14 | Crystals | + | - | - | + | + | - |
| | Tartaric acid (g/l) | 0.89 | 2.06 | 1.89 | 1.75 | 1.09 | 0.95 |
| 25 | Crystals | + | - | + | + | + | - |
| | Tartaric acid (g/l) | 0.85 | 1.94 | 1.62 | 1.25 | 0.93 | 0.83 |

The results of example 1 a-c show that DNA has a stabilizing effect. Excellent results are obtained with DNA of a molecular weight between 1 and 10 kDa.

### Example 2 Effect of RNA on the crystallization of potassium hydrogen tartrate in wine.

To further investigate the effect of RNA in the stabilization of wine, RNA was purchased from Sigma (bakers yeast). RNA fractions were prepared as described for DNA in example 1a. Yields were: fraction MW < 1kDa (RNA-SS): 30mg, 1 kDa < MW < 10kDa (RNA-MS): 92 mg, 1 0kDa < MW (RNA-LS): 105 mg.

### Example 2a RNA-SS fraction (MW < 1kDa)

The freeze dried RNA fraction with molecular weight MW < 1kDa (RNA-SS) was dissolved in water in a concentration of 10 mg/ml. The samples were added to wine as in example 1a.

| Days at - 4°C | property evaluated | Control Stored At - 4°C | Control Stored At Ambient T | 0.3 g/l RNA-SS | 0.2 g/l RNA-SS | 0.1 g/l RNA-SS | 0.05 g/l RNA-SS |
|---|---|---|---|---|---|---|---|
| 4 | Crystals | + | - | - | - | + | + |
| | tartaric acid (g/l) | 1.04 | 1.93 | 1.82 | 1.88 | 1.13 | 1.20 |
| 8 | Crystals | + | - | - | + | + | + |
| 11 | crystals | + | - | - | + | + | + |
| 14 | crystals | + | - | - | + | + | + |
| | tartaric acid (g/l) | 0.89 | 2.06 | 1.83 | 1.03 | 0.88 | 0.85 |
| 25 | crystals | + | - | + | + | + | + |
| | tartaric acid (g/l) | 0.85 | 1.94 | 1.30 | 0.87 | 0.89 | 0.84 |

### Example 2b RNA-MS fraction (1kDa < MW < 10kDa)

The freeze dried RNA fraction with molecular weight MW < 1 kDa (RNA-SS) was dissolved in water in a concentration of 10 mg/ml. The samples were added to wine as in example 1a.

| Days at - 4°C | Property evaluated | Control Stored At -4°C | Control Stored At Ambient T | 0.4 g/l RNA-MS | 0.2 g/l RNA-MS | 0.1 g/l RNA-MS | 0.05 g/l RNA-MS |
|---|---|---|---|---|---|---|---|
| 4 | Crystals | + | - | - | - | - | + |
| | tartaric acid (g/l) | 1.04 | 1.93 | 1.83 | 1.90 | 1.81 | 1.08 |
| 8 | Crystals | + | - | - | - | + | + |
| 11 | Crystals | + | - | - | + | + | + |
| 14 | Crystals | + | - | - | + | + | + |
| | Tartaric acid (g/l) | 0.89 | 2.06 | 1.88 | 1.29 | 0.89 | 0.85 |
| 25 | Crystals | + | - | + | + | + | + |
| | Tartaric acid (g/l) | 0.85 | 1.94 | 1.50 | 0.97 | 0.89 | 0.81 |

### Example 2c RNA-LS fraction (10kDa < MW)

The freeze dried RNA fraction with molecular weight > 10 kDa was dissolved in water in a concentration of 10 mg/ml. The samples were added to wine as in example 1a.

| Days at - 4°C | Property evaluated | Control Stored At -4° C | Control Stored At Ambient T | 0.4g/l RNA-LS | 0.2 g/l RNA-LS | 0.1 g/l RNA-LS | 0.05 g/l RNA-LS |
|---|---|---|---|---|---|---|---|
| 4 | Crystals | + | - | - | - | - | - |
| | Tartaric acid (g/l) | 1.04 | 1.93 | 1.89 | 1.94 | 1.98 | 1.98 |
| 8 | Crystals | + | - | - | - | - | - |
| 11 | Crystals | + | - | - | - | - | - |
| 14 | Crystals | + | - | - | - | - | - |
| | Tartaric acid (g/l) | 0.89 | 2.06 | 1.87 | 1.95 | 1.97 | 1.94 |
| 25 | Crystals | + | - | - | - | - | - |
| | Tartaric acid (g/l) | 0.85 | 1.94 | 1.89 | 1.91 | 1.94 | 1.94 |

The results of example 2a- c demonstrate that RNA has a stabilizing effect. The best results are obtained with RNA fractions of > 10 kDa.

### Example 3 Preparation and characterization of a nucleotide-containing preparation from yeast.

Yeast cells of the species *Saccharomyces cerevisiae* were harvested from the fermentation broth by centrifugation. The concentrated yeast cream is autolysed by adding 2% (w/w) sodium chloride, after which the cream is heated to 52°C for 40 hours. During the autolysis the pH is maintained at 5.4 by using hydrochloric acid and sodium hydroxide. After the autolysis, the remaining insoluble fraction, which consists primarily of the crude cell wall fraction, is separated from the solution by use of a 4-stage disk-stack centrifuge battery. During the separation the solid-fraction is countercurrent washed in order to optimize the yield of the soluble fraction. The separated cell wall fraction with a dry matter content of 12-15% w/w was subjected to the following extraction procedure :
1. Cell walls are suspended in water (1:1, v/v) and centrifuged. The resulting "cake" is resuspended to a concentration of 12-15% (w/v) in a solution of 10 mM potassium metabisulfite and 20 mM citrate adjusted to pH 7.0 by the addition of NaOH.
2. The cell wall suspension thus obtained is heated at 120°C for 2 hours.
3. After cooling, the suspension is centrifuged at 10,000xg for 10 min.
4. The resulting supernatant is filtered on a filter press after addition of 2% of Clarcel CBL3 (CECA, France) as filter aid. Residual insolubles are removed by filtration on a one-plate Seitz filter press equipped with a Seitz-EKS filter (0.1 - 0.3 micron cut-off).
5. The EKS filtrate is submitted to two successive ultra-filtration steps using two membranes of different molecular weight cut-off. First a 100 kDa membrane (Amicon, USA) is used to remove high molecular weight molecules, the retentate being then discarded. The filtrate obtained from the 100 kDa membrane is then concentrated on a membrane with a cut-off of 3 kDa (Amicon). Diafiltration with water is used to remove salts and low molecular weight contaminants from the sample. The final concentration factor of the retentate is typically 10.
6. The final desalted concentrate is lyophilized to give the nucleotide preparation sample MDR1. This preparation is characterized by a contents of 1-1.5% RNA and 1.5-2% DNA.

### Example 3a Effect of MDR1 on the crystallization of potassium hydrogen tartrate in wine.

A freeze dried fraction of MDR1 was dissolved in H₂O to obtain a stock solution of 15 mg/ml. Small volumes of this stock solution were transferred into 10 ml of unstable white wine. In this way final concentrations of MDR1 were obtained of 0.6 g/l, 0.4 g/l and 0.2 g/l. These samples were stored for approximately 1 hour at +4 °C, and all insolubles were removed by centrifugation. Next, the clear supernatants were transferred into a glass vial, and stored at -4 °C. The temperature was kept constant between -2 and -6 °C.The samples were evaluated visually for tartaric acid crystals. The dissolved tartaric acid concentration was determined as described before.

| Days at -4°C | Property evaluated | control stored at -4°C | Control stored at ambient T | 0.6 g/l of MDR1 | 0.4 g/l of MDR1 | 0.2 g/l of MDR1 |
|---|---|---|---|---|---|---|
| 4 | Crystals | + | - | - | - | - |
| | Tartaric acid (g/l) | 1.04 | 1.93 | 1.90 | 1.92 | 1.98 |
| 8 | Crystals | + | - | - | - | - |
| 11 | Crystals | + | - | - | - | - |
| 14 | crystals | + | - | - | - | - |
| | Tartaric acid (g/l) | 0.89 | 2.06 | 1.91 | 1.93 | 1.94 |
| 25 | Crystals | + | - | - | - | + |
| | Tartaric acid (g/l) | 0.85 | 1.94 | 1.92 | 1.94 | 1.86 |

These results show that also not completely purified nucleotides stabilize wine.

### Comparative Example 4 Preparation and characterization of a nucleotide-free preparation.

All nucleotides were removed from MDR1 in the following way: RNase was added to the product, the pH was adjusted to 5.6, and the solution was heated to 65 °C for 5 ½ hours. The pH was readjusted to 5.6 after 2 hours. The final solution was passed over an ultra-filtration membrane (MW cut-off 2000) to remove all mononucleotides. The retentate was freeze dried and an NMR spectrum was recorded and compared with the NMR spectrum of MDR1. The spectra showed that all nucleotides had been removed.

### Comparative Example 4a Effect of a nucleotide-free preparation on the crystallization of potassium hydrogen tartrate in wine.

The freeze dried product was added to unstable wine in the same way and concentrations as described in example 3a .

| Days at -4°C | Property evaluated | control stored at -4°C | Control stored at ambient T | 0.6 g/l of sample | 0.4 g/l of sample | 0.2 g/l of sample |
|---|---|---|---|---|---|---|
| 4 | Crystals | + | - | - | + | - |
| | Tartaric acid (g/l) | 1.04 | 1.93 | 1.83 | 1.39 | 1.15 |
| 8 | Crystals | + | - | + | + | - |
| 11 | Crystals | + | - | + | + | - |
| 14 | Crystals | + | - | + | + | - |
| | Tartaric acid (g/l) | 0.89 | 2.06 | 1.16 | 0.99 | 0.90 |
| 25 | Crystals | + | - | + | + | - |
| | Tartaric acid (g/l) | 0.85 | 1.94 | 1.00 | 0.89 | 0.83 |

These results show that the nucleotide-free preparation has hardly any stabilizing effect on the wine compared to the nucleotide-containing preparation.

### Example 5 Long-term stabilization experiments

A nucelotide-containing preparation was prepared as described in Example 3. The sample obtained was labelled MR1.

Molecular weight distribution of molecules in MR1 has been determined by size-exclusion chromatography analysis on a TSK G3000SW column. Soluble molecules in MR1 have molecular weights in the range 5-50 kDa.

The dry matter content of the freeze-dried MR1 is 98%. Analyses of the compounds listed below have been performed by standard procedures or as described.

| Component | Percentage (w/w) |
|---|---|
| Total nitrogen | 10.8 |
| | |
| Phosphate | 6.3 |
| Sodium | 2.0 |
| Potassium | 1.0 |
| Total ashes | 3.0 |
| | |
| Total carbohydrates | 25 |
| Glucose | 0.7 |
| Mannose | 22.0 |
| Ribose | 6.75 |
| | |
| Protein | 54 |
| Mannoproteins | 77 |
| | |
| RNA | 15 |
| | |
| Molecular weight distribution | 20-30 kDa |

The RNA content was calculated from the ribose content (6.76%) via the respective molecular weights. The molecular weight of a nucleotide in RNA is 339 Da and of ribose is 150 Da. Therefore, the RNA content is 339/150 x 6.75 = 15%. The protein content was calculated from the total nitrogen (10.8%) corrected for the nitrogen present in RNA (2.2%) via (10.8-2.2) x 6.25 = 54%.

### Example 5a Effect of MR1 on the crystallization of potassium hydrogen tartrate in a very unstable white wine.

Samples of nucleotide preparation MR1 have been added to wines of different tartaric instabilities (i.e. very unstable and unstable).

A 75 g/l solution of MR1 preparation in water has been prepared. Aliquots of 1, 2, 3, and 4 ml have been added to 0.5 liter of wine to reach respective final concentrations of 150, 300, 450 and 600 mg/I. The results are presented below.

| MR1 (mg/l of wine) | T_{crys} (days) | T_{crys}^{stabilized wine} / T_{crys}^{unstable wine} | DTI (%) | DTI^{stabilized wine} / DTI^{unstable wine} |
|---|---|---|---|---|
| 0 | 1 | | 23 | |
| 300 | 43 | 43 | nd | nd |
| 450 | 64 | 64 | 16 | 0.7 |
| 600 | 90 | 90 | 7 | 0.3 |

They show that the white wine used is very unstable (KHT crystals can be observed already after 1 day of storage at -4°C). After addition of 300 mg/l MR1, the time necessary to detect the formation of KHT crystals increased to 43 days.

This KHT instability of this white wine is characterized by a DTI of 23%. After addition of 450 and 600 mg/l MR1, the DTI value decreased to 16 and 7% respectively..

The results obtained with the two methods on this very unstable white wine demonstrate that MR1 prevents both the nucleation of KHT crystals and inhibits their growth. The treated wines can be considered as stable.

### Example 5b Effect of MR1 on the crystallization of potassium hydrogen tartrate in an unstable white wine

The results for the unstable white wine are presented below.

| MR1 (mg/l of wine) | T_{crys} (days) | T_{crys}^{stabilized wine} / T_{crys}^{unstable wine} | DTI (%) | DTI^{stabilized wine} / DTI^{unstable wine} |
|---|---|---|---|---|
| 0 | 11 | | 16.1 | |
| 450 | >120 | >11 | 4.1 | 0.25 |

They show that this white wine is unstable since KHT crystals can be observed after 11 days of storage at - 4°C. After addition of MR1 at 450 mg/l, no crystals could be detected after 120 days of storage at 4°C.

The KHT instability of this white wine is characterized by a DTI of 16.1%. After addition of 450 mg/l of MR1, the DTI value decreased to 4.1 %, showing that MR1 prevents the growth of KHT crystals.

The combined use of the two methods on this unstable white wine indicates that MR1 prevents both the nucleation of KHT crystals and inhibit their growth. Treated wines can be considered as stable.

## Claims

1. A process for stabilizing wine by preventing or retarding the crystallization of salts of tartaric acid, which process comprises the addition of an oligonucleotide or polynucleotide containing preparation to the grape must or to the wine.

2. A process according to claim 1, wherein the oligonucleotide or polynucleotide containing preparation also comprises yeast cell wall components or parts thereof.

3. A process according to claim 2, wherein the yeast cell wall component is a mannoprotein.

4. A process according to claim 1-3, wherein the oligonucleotide or polynucleotide containing preparation is derived from bacteria, fungi or yeasts.

5. A process according to claims 1-4, wherein the oligonucleotide or polynucleotide containing preparation is derived from the yeasts Saccharomyces or Kluyveromyces.

6. A process according to claim 1-5 wherein the oligonucleotide or polynucleotide containing preparation is derived from *Saccharomyces cerevisiae*.

7. A process according to claims 1-6 wherein the oligonucleotide or polynucleotide containing preparation is added to give final nucleic acid concentrations between 1 and 400 mg per liter of must or wine.

8. A process according to claim 1-7 wherein the oligonucleotide or polynucleotide is DNA, RNA or a combination of both.

9. A process according to claim 1-8 wherein the oligonucleotide or polynucleotide has a molecular weight between 0.4 and 500 kDa as determined by size-exclusion chromatography using a column that is calibrated with protein molecular weight standards.

10. A process for preparing an oligonucleotide or polynucleotide containing preparation according to claims 1-9, which process comprises:
- autolysis of yeast cells at pH 5.4, 52°C for 40 hours
- followed by separation of the cell wall containing fraction by centrifugation in such a way that a dry matter content of 12-15% of the cell wall containing fraction is reached
- followed by the addition of buffer to obtain a solution of pH 7
- followed by a heatshock at 120°C for 2 hours
- followed by centrifugation in which most of the insolubles are removed.
- followed by filtration to clarify the liquid/broth
- followed by ultra-filtration of the clarified liquid to obtain a fraction with molecular weight between 3 and 100 kDa and concentration factor of about 10.

11. Use of an oligonucleotide or polynucleotide containing preparation to stabilize wine.

12. Use according to claim 11, wherein the oligonucleotide or polynucleotide containing preparation is used to prevent or retard the crystallisation of salts of tartaric acid.

13. Use according to claim 11 or 12, wherein the oligonucleotide or polynucleotide containing preparation is derived from bacteria, fungi or yeasts.

14. Use according to claim 13, wherein the yeast is *Brettanomyces, Saccharomyces* or *Kluyveromyces*.

15. Use according to claims 14, wherein the yeast is *Saccharomyces cerevisiae*.

16. Use according to claims 11-15, wherein the oligonucleotide or polynucleotide containing preparation contains between 0.1 and 100% nucleic acid.

17. Use. according to claims 11-16, wherein the nucleic acid is DNA, RNA or a combination of both.

18. Use according to claims 11-17, wherein the oligonucleotide or polynucleotide has a molecular weight between 0.4 and 500 kDa as determined by size-exclusion chromatography using a column that is calibrated with protein molecular weight standards.

## Patentansprüche

1. Verfahren zum Stabilisieren von Wein durch Verhindern oder Verzögern der Kristallisation von Salzen von Weinsäure, welches Verfahren die Zugabe eines Oligonukleotid- oder Polynukleotidhältigen Präparates zum Traubenmost oder zum Wein umfasst.

2. Verfahren nach Anspruch 1, wobei das Oligonukleotid- oder Polynukleotid-hältige Präparat auch Hefe-Zellwand-Komponenten oder Teile davon umfasst.

3. Verfahren nach Anspruch 2, wobei die Hefe-Zellwand-Komponente ein Mannoprotein ist.

4. Verfahren nach Anspruch 1 bis 3, wobei das Oligonukleotidoder Polynukleotid-hältige Präparat von Bakterien, Pilzen oder Hefen stammt.

5. Verfahren nach den Ansprüche 1 bis 4, wobei das Oligonukleotid- oder Polynukleotid-hältige Präparat von den Hefen Saccharomyces oder Kluyveromyces stammt.

6. Verfahren nach Anspruch 1 bis 5, wobei das Oligonukleotidoder Polynukleotid-hältige Präparat von *Saccharomyces cerevisiae* stammt.

7. Verfahren nach den Ansprüchen 1 bis 6, wobei das Oligonukleotid- oder Polynukleotid-hältige Präparat zum Erhalt von Nukleinsäure-Endkonzentrationen zwischen 1 und 400 mg pro Liter Most oder Wein zugesetzt wird.

8. Verfahren nach Anspruch 1 bis 7, wobei das Oligonukleotid oder Polynukleotid DNA, RNA oder eine Kombination von beiden ist.

9. Verfahren nach Anspruch 1 bis 8, wobei das Oligonukleotid oder Polynukleotid ein Molekulargewicht zwischen 0,4 und 500 kDa hat, wie mittels Größenausschluss-Chromatographie (SEC) unter Verwendung einer Säule, die mit Protein-Molekulargewicht-Standards geeicht ist, bestimmt.

10. Verfahren zur Herstellung eines Oligonukleotid- oder Polynukleotid-hältigen Präparates nach den Ansprüchen 1 bis 9, welches Verfahren umfasst:
• 40-stündige Autolyse von Hefezellen bei pH 5,4, 52°C,
• gefolgt von der Trennung der zellwand-hältigen Fraktion durch zentrifugieren derart, dass ein Trockensubstanzgehalt von 12-15% der Zellwand-hältigen Fraktion erreicht wird,
• gefolgt von der Zugabe von Puffer zum Erhalt einer Lösung mit einem pH-Wert von 7,
• gefolgt von einem zweistündigen Hitzeschock bei 120°C,
• gefolgt von Zentrifugieren, bei welchem der Großteil des unlöslichen Materials entfernt wird,
• gefolgt von Filtrieren zur Klärung der Flüssigkeit/Nährlösung,
• gefolgt von Ultra-Filtrieren der geklärten Flüssigkeit zum Erhalt einer Fraktion mit einem Molekulargewicht zwsichen 3 und 100 kDa und einem Konzentrationsfaktor von etwa 10.

11. Verwendung eines Oligonukleotid- oder Polynukleotid-hältigen Präparates zur Stabilisierung von Wein.

12. Verwendung nach Anspruch 11, wobei das Oligonukleotidoder Polynukleotid-hältige Präparat verwendet wird, um die Kristallisation von Weinsäure-Salzen zu verhindern oder zu verzögern.

13. Verwendung nach Anspruch 11 oder 12, wobei das Oligonukleotid- oder Polynukleotid-hältige Präparat von Bakterien, Pilzen oder Hefen stammt.

14. Verwendung nach Anspruch 13, wobei die Hefe *Brettanomyces*, *Saccharomyces* oder *Kluyveromyces* ist.

15. Verwendung nach Anspruch 14, wobei die Hefe *Saccharomyces cerevisiae* ist.

16. Verwendung nach den Ansprüchen 11 bis 15, wobei das Oligonukleotid- oder Polynukleotid-hältige Präparat zwischen 0,1 und 100% Nukleinsäure enthält.

17. Verwendung nach den Ansprüchen 11 bis 16, wobei die Nukleinsäure DNA, RNA oder eine Kombination von beiden ist.

18. Verwendung nach den Ansprüchen 11 bis 17, wobei das Oligonukleotid oder Polynukleotid ein Molekulargewicht zwischen 0,4 und 500 kDa hat, wie mittels Größenausschlusschromatographie (SEC) unter Verwendung einer Säule, die mit Protein-Molekulargewicht-Standards geeicht ist, bestimmt.

## Revendications

1. Procédé de stabilisation du vin en empêchant ou retardant la cristallisation des sels de l'acide tartrique, ledit procédé comprenant l'addition au moût de raisin ou au vin d'une préparation contenant un oligonucléotide ou un polynucléotide.

2. Procédé suivant la revendication 1, dans lequel la préparation contenant un oligonucléotide ou un polynucléotide contient également des composantes pariétales cellulaires de levures ou des fractions de celles-ci.

3. Procédé suivant la revendication 2, dans lequel la composante pariétale cellulaire de levure est une mannoprotéine.

4. Procédé suivant les revendications 1 à 3, dans lequel la préparation contenant un oligonucléotide ou un polynucléotide est dérivée de bactéries, de champignons ou de levures.

5. Procédé suivant les revendications 1 à 4, dans lequel la préparation contenant un oligonucléotide ou un polynucléotide est dérivée des levures Saccharomyces ou Kluyveromyces.

6. Procédé suivant les revendications 1 à 5, dans lequel la préparation contenant un oligonucléotide ou un polynucléotide est dérivée de *Saccharomyces cerevisiae*.

7. Procédé suivant les revendications 1 à 6, dans lequel la préparation contenant un oligonucléotide ou un polynucléotide est ajoutée pour produire des concentrations finales d'acide nucléique comprises entre 1 et 400 mg par litre de moût ou de vin.

8. Procédé suivant les revendications 1 à 7, dans lequel l'oligonucléotide ou le polynucléotide est de l'ADN ou de l'ARN ou une combinaison des deux.

9. Procédé suivant les revendications 1 à 8, dans lequel l'oligonucléotide ou le polynucléotide a un poids moléculaire compris entre 0,4 et 500 kDa, tel que déterminé par chromatographie d'exclusion stérique sur une colonne calibrée avec des étalons de poids moléculaire de protéines.

10. Procédé de préparation d'une préparation contenant un oligonucléotide ou un polynucléotide suivant les revendications 1 à 9, ledit procédé comprenant :
- une autolyse des parois de levure à un pH de 5,4, à 52 °C pendant 40 heures,
- puis la séparation de la fraction contenant la paroi cellulaire par centrifugation de telle manière qu'on obtienne une teneur en matière sèche de 12-15 % de la fraction contenant la paroi cellulaire,
- puis l'addition d'un tampon pour obtenir une solution de pH 7,
- puis un choc thermique à 120 °C pendant 2 heures,
- puis une centrifugation dans laquelle la plupart des insolubles sont éliminés,
- puis une filtration pour clarifier le liquide/bouillon,
- puis une ultra-filtration du liquide clarifié pour obtenir une fraction de poids moléculaire compris entre 3 et 100 kDa et un facteur de concentration d'environ 10.

11. Utilisation d'une préparation contenant un oligonucléotide ou un polynucléotide en vue de stabiliser le vin.

12. Utilisation suivant la revendication 11, dans laquelle la préparation contenant un oligonucléotide ou un polynucléotide est utilisée pour empêcher ou retarder la cristallisation des sels de l'acide tartrique.

13. Utilisation suivant la revendication 11 ou 12, dans laquelle la préparation contenant un oligonucléotide ou un polynucléotide est dérivée de bactéries, de champignons ou de levures.

14. Utilisation suivant la revendication 13, dans laquelle les levures sont des *Brettanomyces,* des *Saccharomyces* ou des *Kluyveromyces*.

15. Utilisation suivant la revendication 14, dans laquelle les levures sont des *Saccharomyces cerevisiae*.

16. Utilisation suivant les revendications 11 à 15, dans laquelle la préparation contenant un oligonucléotide ou un polynucléotide contient entre 0,1 et 100 % d'acide nucléique.

17. Utilisation suivant les revendications 11 à 16, dans laquelle l'acide nucléique est de l'ADN, de l'ARN ou une combinaison des deux.

18. Utilisation suivant les revendications 11 à 17, dans laquelle l'oligonucléotide ou le polynucléotide a un poids moléculaire compris entre 0,4 et 500 kDa, tel que déterminé par chromatographie d'exclusion stérique à l'aide d'une colonne calibrée avec des étalons de poids moléculaire de protéines.
